# EUROPÄISCHE PATENTSCHRIFT

(11) **EP 0 848 281 B1**
(45) Veröffentlichungstag und Bekanntmachung des Hinweises auf die Patenterteilung: **19.04.2006**
(21) Anmeldenummer: 97810936.1
(22) Anmeldetag: 02.12.1997
(51) Int. Cl.: G02F 1/141, C09K 19/02

(54) **Ferroelektrische Flüssigkristallzelle**
Ferroelectric liquid crystal cell
Cellule à cristaux liquides ferroélectriques

(30) Priorität: 13.12.1996 CH 307396
(43) Veröffentlichungstag der Anmeldung: 17.06.1998
(73) Patentinhaber: Rolic AG, 6301 Zug (CH)
(72) Erfinder: Fünfschilling, Jürg, Prof. Dr., 4054 Basel (CH); Schadt, Martin, Dr., 4411 Seltisberg (CH)
(74) Vertreter: Liebetanz, Michael

(56) Entgegenhaltungen:
- FUNFSCHILLING J ET AL: "Fast responding and highly multiplexible distorted helix ferroelectric liquid-crystal displays" JOURNAL OF APPLIED PHYSICS, 15 OCT. 1989, USA, Bd. 66, Nr. 8, ISSN 0021-8979, Seiten 3877-3882, XP000073911
- CHANDANI A D L ET AL: "Tristable switching in surface stabilized ferroelectric liquid crystals with a large spontaneous polarization" JAPANESE JOURNAL OF APPLIED PHYSICS, PART 2 (LETTERS), MAY 1988, JAPAN, Bd. 27, Nr. 5, ISSN 0021-4922, Seiten 729-732, XP002036252

## Beschreibung

Die Erfindung betrifft eine Flüssigkristallzelle - nachfolgend auch Anzeigezelle genannt - mit einer ferroelektrischen, chiral-smektischen Flüssigkristallschicht, nämlich eine Anzeigezelle gemäss dem Oberbegriff des Anspruchs 1.

Bekannte Flüssigkristallzellen besitzen eine nematische Flüssigkristall-Konfiguration und werden entsprechend dieser Konfiguration als TN- oder STN-Zellen bezeichnet. Hierbei steht TN für Twisted Nematic und STN für Super Twisted Nematic. Solche Zellen sind für viele elektrooptische Anwendungen ausreichend. So besitzen die meisten der heute bekannten Flüssigkristall-Anzeigen Aktiv-Matrix-angesteuerte TN-Zellen. Bei diesen Anzeigezellen ist jedem Bildpunkt ein Anzeigesegment zugeordnet, welches mittels einer dazugehörigen Halbleiterschaltung elektrisch angesteuert werden kann. Viele der elektrooptischen Anforderungen, wie Kontrast, Graustufen und Orientierbarkeit der Flüssigkristallschicht werden von TN-Anzeigen optimal gelöst, was ihre weite Verbreitung erklärt.

Allerdings kann die TN-Anzeigezelle nicht allen Anforderungen gleichermassen gerecht werden. Wichtige Nachteile sind ein eingeschränkter Blickwinkelbereich und langsame Schaltzeiten. Diese Nachteile sind in der Physik der TN-Zelle begründet und können nicht einfach umgangen werden. So ist bei dieser Anzeigezelle zwar das Einschalten, nicht aber das Ausschalten elektrisch getrieben. Das hat zur Folge, dass die Schaltzeiten, d.h. die Geschwindigkeiten für den Bildaufbau und Bildabbau, durch die Viskosität und die elastischen Rückstellkräfte der nematischen Flüssigkristallmischung bestimmt, ja limitiert werden. TN-Zellen sind daher für eine Darstellung von kurz nacheinander ablaufenden Bildfolgen nicht geschaffen. Dies gilt zum Beispiel für viele moderne Multimedia-Anwendungen und dergleichen.

Es wurde schon früh nach einer Alternative für die TN-Anzeigezelle gesucht. Als raschere Medien bieten sich hierbei die ferroelektrischen, chiral-smektischen Flüssigkristalle an. Diese haben eine spontane Polarisation, welche eine viel stärkere Kopplung des Flüssigkristalls an das elektrische Feld erlaubt, als dies bei TN-Zellen möglich ist. Insbesondere ist aber diese Kopplung linear im Feld. Dies hat zwei wichtige Konsequenzen. Erstens sind die Drehmomente bereits bei kleinen Ansteuerspannungen gross und zweitens ist bei einer eine ferroelektrische, chiral-smektische Flüssigkristallschicht enthaltenden Anzeigezelle sowohl das Einschalten wie auch das Ausschalten elektrisch getrieben und somit verhältnismässig schnell.

Ferroelektrische, chiral-smektische Flüssigkristallzellen besitzen eine, nachfolgend auch als S_{C}*-Schicht (* steht hier für die Chiralität der Flüssigkristallschicht) bezeichnete, doppelbrechende und gegebenenfalls eine helikale Konfiguration ausbildende Flüssigkristallmischung, welche durch Einwirkung eines elektrischen Feldes so beeinflusst bzw. deformiert werden kann, dass sich ihre optische Anisotropie ändert.

Smektisch bezeichnet eine geschichtete Struktur, die darauf beruht, dass die Moleküle der Flüssigkristallmischung polarisierbare Kerne und apolare Seitenketten besitzen. In der smektischen Phase ordnen sich in diesem Fall die polaren Kerne in den smektischen Schichten an, welche ihrerseits durch apolare Schichten aus Seitenketten voneinander getrennt sind. Die smektischen Schichten stehen bei ferroelektrischen Flüssigkristallzellen im wesentlichen senkrecht auf den Platten der Anzeigezelle.

Die S_{C}*-Schicht zeichnet sich noch durch weitere Eigenschaften aus. So sind die zu einer smektischen Schicht gehörenden und zueinander im wesentlichen parallel angeordneten Molekülkerne nicht senkrecht zu den dazugehörigen Schichtebenen angeordnet, sondern um einen Winkel θ von der Ebenen-Normalen weggekippt. Weitere wesentliche Eigenschaften der S_{C}*-schicht beruhen auf ihrer Chiralität. Diese verleiht der S_{C}*-Schicht nämlich eine spontane Polarisation P_{S}, deren Richtung in der Ebene der smektischen Schichten liegt und senkrecht auf den Molekülen steht. Das bedeutet, dass ein an der Anzeigezelle angelegtes elektrisches Feld stark mit dieser spontanen Polarisation wechselwirkt, was eine wesentliche Verkürzung der von TN- und STN-Zellen bekannten Schaltzeiten erlaubt. Die Chiralität führt ferner dazu, dass ohne äussere Kräfte die Achsen der Flüssigkristallmoleküle von Schicht zu Schicht gegeneinander verdreht sind, so dass sich dadurch eine schraubenförmige Helix mit der Ganghöhe p bildet.

Eine bekannte ferroelektrische, chiral-smektische Flüssigkristallzelle ist aus der EP-B 0 309 774 bekannt. So besitzt die aus dieser Vorveröffentlichung bekannte DHF-Zelle (Deformed Helix Ferroelectric) ein Paar transparenter Platten, die zusammen die S_{c}*-Schicht einschliessen, mit je einer die Moleküle der S_{c}*-Schicht ausrichtenden Oberflächenstruktur, mit Elektroden zur Erzeugung eines elektrischen Feldes im Flüssigkristall und je einem Polarisator versehen sind. Die der S_{*c*}*-Schicht zugewandten Oberflächenstrukturen üben hierbei auf die angrenzenden Flüssigkristallmoleküle eine Richtwirkung aus.

Im Ruhezustand, d.h. ohne angelegtes elektrisches Feld, zeigt die DHF-Zelle eine bestimmte Lichtdurchlässigkeit. Wird an den Elektroden eine Spannung angelegt, so entsteht in der S_{c}*-Schicht ein elektrisches Feld, das eine Umorientierung der Moleküle und somit eine Umorientierung der einzelnen smektischen Schichten bewirkt, was schliesslich eine Änderung der Lichtdurchlässigkeit zur Folge hat. Dieser der DHF-Anzeige zugrunde liegende elektrooptische Effekt ist dem Fachmann bekannt. Man geht dabei von einer Flüssigkristallkonfiguration aus, die eine kurze Ganghöhe p aufweist. Die Ganghöhe p ist dabei so gewählt, dass das Licht über die Windungen der Helix mittelt, d.h. nur einen gemittelten Brechungsindex erfährt. Für eine ungestörte Helix erhält man so eine doppelbrechende Schicht mit einer zur Helixachse parallelen optischen Achse. Wird eine Spannung an die Elektroden der beiden Platten angelegt, so wirken Drehmomente auf die einzelnen smektischen Schichten. Diese Drehmomente bewirken die vorstehend genannte Umorientierung der einzelnen smektischen Schichten und dadurch auch eine Rotation der optischen Achse in einer zu den die Flüssigkristallschicht begrenzenden Platten parallelen Ebene. Die Rotation der optischen Achse in Abhängigkeit von der angelegten Spannung lässt sich in der Praxis durch Messung des Schaltwinkels α bestimmen. Als gesättigten Schaltwinkel bezeichnet man hierbei denjenigen Winkel α, der sich bei einer Erhöhung der angelegten Betriebsspannung, welche im praktischen Fall durch periodische Signale oder auch Ansteuerimpulse gekennzeichnet ist, nicht mehr ändert.

Bekannten DHF-Zellen sind Schwarz/Weiss-Anzeigen. Sie erzeugen in Abhängigkeit vom angelegten elektrischen Feld sich kontinuierlich ändernde Graustufen. Werden nun die je einen Bildpunkt definierenden Elektrodensegmente in drei Unterelektroden aufgeteilt und mit geeigneten Farbfiltern für die Farben Rot, Grün und Blau versehen, lassen sich in bekannter Art und Weise farbige DHF-Anzeigen erzeugen, bei welchen die roten, grünen und blauen Farbpunkte mittels einer Spannungsquelle von dunkel bis maximal hell angesteuert werden können.

Die kommerzielle Herstellung sowohl von Schwarz/Weissals auch farbigen DHF-Anzeigen hat sich bis heute kaum durchgesetzt. Dies insbesondere deshalb, weil die dazu notwendigen DHF-Zellen aufgrund des bekannten Standes der Technik zwar kurze Schaltzeiten, Graustufen und einen guten Blickwinkelbereich besitzen, aber für ihren Betrieb relativ hohe Spannungen und Ströme benötigen. Dazu kommt, dass bei der Herstellung einer DHF-Zelle und zur Erreichung von hohen Kontrastwerten die Flüssigkristallmischung noch zusätzlich mittels eines elektrischen Feldes orientiert bzw. formatiert werden muss, was den Herstellungsprozess zusätzlich erschwert.

Ausgehend von der EP-A 0'405'346 liegt nun der Erfindung die Aufgabe zugrunde, eine Flüssigkristallzelle bereitzustellen, welche die wesentlichen Vorteile von bekannten ferroelektrischen Anzeigezellen besitzt, nämlich eine geringe Blickwinkelabhängigkeit, Graustufen und kurze Schaltzeiten, nicht aber die vorstehend genannten Nachteile der bekannten DHF-Anzeigezelle.

Diese Aufgabe wird erfindungsgemässe durch eine Flüssigkristallzelle mit den Merkmalen des Patentanspruchs 1 gelöst, nämlich durch eine Zelle, die sich dadurch auszeichnet, dass
- die Schichtdicke d der Flüssigkristallschicht kleiner ist als die Helixganghöhe p,
- der gesättigte Schaltwinkel α grösser ist als 60°,
- die Strom-Spannungskennlinie der Zelle zwei Höchstwerte besitzt, und zwar einen für U > 0 und einen für U < 0, und
- der optische Gangunterschied Δn·d_{eff} bei U = 0 grösser ist als in den beiden optisch voll angesteuerten, gesättigten Zuständen für U > 0 und U < 0, wobei Δn die Doppelbrechung und d_{eff} die vom Licht zwischen einem Polarisator und einem Analysator im Flüssigkristall zurückgelegte Strecke ist.

Bevorzugte Ausführungsbeispiele der erfindungsgemässen Anzeigezelle zeichnen sich hierbei insbesondere durch folgende - nachträglich noch näher erläuterte - Eigenschaften auf.
- Die Anzeige ist bei einer fehlenden Ansteuerspannung (U = 0) dunkel.
- Legt man eine Ansteuerspannung an die Zelle an, so wird die Anzeige hell.
- Die Strom-Spannungs-Hysteresekennlinie der Anzeigezelle zeigt zwei nahezu gleich grosse Maxima.
- Die Doppelbrechung Δn ist im feldfreien Zustand (=Nullfeld) grösser als in den beiden voll angesteuerten, gesättigten Zuständen, bei welchen eine weitere Erhöhung des angelegten elektrischen Feldes keine wesentliche Transmissionsänderung mehr bewirkt.
- Die Sättigungsspannung ist - im Gegensatz zu bekannten DHF-Zellen - auch bei sehr geringer spontaner Polarisation (Pₛ < 5 nC/cm²) klein.

Es sei an dieser Stelle darauf hingewiesen dass zwar aus A.D.L. Chandani et al., Jpn. J. Appl. Phys., 27(1988),L 729 eine Anzeigezelle mit einer S_{C}*-Schicht bekannt ist, die ebenfalls eine Strom-Spannungs-Hysteresekennlinie mit zwei Maxima zeigt. Bei dieser sogenannten antiferroelektrischen Anzeigezelle wechseln die spontanen Polarisationen P_{S} von Molekülebene zu Molekülebene ihre Vorzeichen, was bei der erfindungsgemässen Anzeigezelle nicht der Fall ist. Die antiferroelektrische Anzeigezelle ist darüber hinaus dadurch gekennzeichnet, dass die Doppelbrechung Δn der Flüssigkristallschicht bei U = 0 kleiner ist als bei einem angelegten elektrischen Feld. Diese bekannte Anzeigezelle ist also vom Gegenstand der hier vorliegenden Erfindung grundsätzlich verschieden und gibt keine Anregung für die Lösung der erfindungsgemässen Aufgabe.

Im folgenden wird anhand der beiliegenden Zeichnung die Erfindung näher beschrieben. Es zeigen
die Figur 1 einen schematischen Schnitt durch einen Ausschnitt einer erfindungsgemässen farbigen Anzeigezelle,
die Figur 2 eine vereinfachte, perspektivische Ansicht des in der Figur 1 dargestellten Ausschnittes,
die Figur 3 eine vergrösserte, graphische Darstellung einer einzelnen smektischen Schicht einer S_{c}*-Phase,
die Figuren 4, 5 und 6 eine vereinfachte, graphische Darstellung mehrerer smektischen Schichten mit den dazugehörigen Molekülausrichtungen in Abhängigkeit von der Ansteuerspannung, und
die Figur 7 eine vereinfachte, schematische Darstellung einer reflektierenden Anzeigezelle.

Bevor die mit einer erfindungsgemässen Zelle erzeugbaren, vorteilhaften elektrooptischen Effekte erläutert werden, wird der allgemeine Aufbau einer bevorzugten, farbigen Anzeigezelle näher beschrieben.

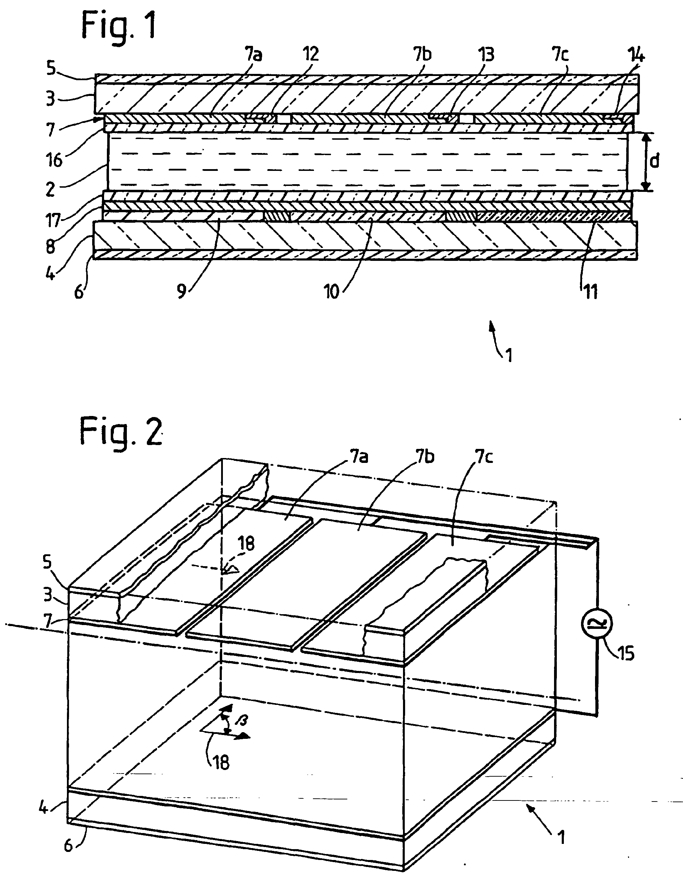

Die in den Figuren 1 und 2 dargestellte und als ganzes mit 1 bezeichnete Anzeigezelle besitzt eine S_{C}*-Schicht 2 mit einer Schichtdicke d, die zwischen zwei zueinander parallelen Platten 3 und 4 aus lichtdurchlässigem Material angeordnet ist. Als lichtdurchlässiges Material für die parallelen Platten 3 und 4 kommen zum Beispiel Glas, Acrylglas oder Kunststoff-Folien in Frage. Die Schichtdicke d beträgt vorzugsweise etwa 2 µm bis 3 µm, beispielsweise etwa 2,1 µm. Da es sich bei dieser Zelle um eine Direktsichtanzeigezelle handelt, ist ferner die vom Licht innerhalb des Flüssigkristalls zurückgelegte Strecke d_{eff} gleich der Schichtdicke d.

Auf der Aussenseite der oberen Platte 3 befindet sich ein Polarisator 5, der vorzugsweise mit der Platte 3 verbunden, beispielsweise auf dieser aufgeklebt ist. Entsprechend ist der unteren Platte 4 in analoger Weise ein Polarisator 6 zugeordnet, der als Analysator dient, wenn das Licht im gezeichneten Ausführungsbeispiel von oben einfällt. Alternativ können diese Polarisatoren auch innerhalb der Zelle angeordnet oder sogar durch die Platten 2 und 3 vorgegeben sein, wenn diese beispielsweise aus einem Kunststoff bestehen, der ausgerichtete dichroitische Farbstoffmoleküle enthält.

Auf ihren der Flüssigkristallschicht 2 zugewandten Oberflächen weisen die Platten 3 und 4 durchsichtige Elektroden 7 und 8 auf, welche die üblichen, zur Darstellung von Zeichen oder Bildpunkten bestimmten Elektrodensegmente bilden, wobei auf dem hier dargestellten Ausschnitt lediglich die Elemente eines einzelnen Elektrodensegmentes gezeichnet sind, welches zur Darstellung eines Bildpunktes in die drei Farbpixel für die Farben Rot, Grün und Blau eingeteilt ist. So ist der obere Abschnitt der Elektrode 7 in drei Unterelektroden 7a, 7b und 7c aufgeteilt und der gegenüberliegende Abschnitt der Elektrode 8, der gegebenenfalls auch segmentiert sein kann, mit den einzelnen Unterelektroden 7a, 7b und 7c zugeordneten Farbfiltern 9, 10 und 11 versehen. Zu jeder Unterelektrode 7a, 7b und 7c gehören noch elektronische Bauteile 12, 13 und 14, wie etwa Dünnfilmtransistoren und dergleichen. Letztere bilden zusammen mit einer Treiberelektronik 15, mit welcher die Unterelektroden 7a, 7b und 7c unabhängig voneinander angesteuert werden können, die eingangs bereits genannte Aktiv-Matrix. Alternativ dazu kann die Ansteuerung auch durch eine externe elektronische Schaltung erfolgen. (Erfindungsgemäss sind also auch nicht Aktiv-Matrix adressierte Zellen möglich.)

Die der S_{C}*-Schicht zugewandten Oberflächen der Glasplatten 3 und 4 sind zudem so behandelt, dass sie auf die angrenzenden Flüssigkristallmoleküle und somit auch auf die gesamte Flüssigkristallschicht eine Richtwirkung ausüben und damit die Richtung des Direktors bestimmen. Diese Behandlung besteht beispielsweise im Beschichten mit einer Polymerschicht und im Reiben der Oberflächen in einer Richtung. So kann es sich hierbei um parallel geriebene Polyimid-Orientierungsschichten handeln, wie zum Beispiel um die Polyimid-Orientierungsschicht SE 510 von Nissan Chemical Industries Ltd. Andere Möglichkeiten sind photoorientierte Orientierungsschichten oder das Schrägaufdampfen orientierender Schichten. Solche Schichten sind in der Figur 1 dargestellt und mit 16 und 17 bezeichnet.

Das Ergebnis solcher Behandlungen wird nachfolgend auch als Oberflächenorientierung bezeichnet. Diese ist auf den beiden Platten 13 und 14 durch die Pfeile 18 dargestellt, wobei die Oberflächenorientierung der oberen Platte 3 zu der der unteren Platte 4 parallel ist.

Der zur oberen Platte 3 gehörende Polarisator 5 ist so angeordnet, dass seine Polarisationsrichtung zur Oberflächenorientierung parallel ist. Demgegenüber schliesst die Polarisationsrichtung des zur unteren Platte 4 gehörenden Polarisators 6 mit der Richtung der Oberflächenorientierung, bzw. mit der Polarisationsrichtung des Polarisators 5, einen Winkel β ein. Dieser Winkel β beträgt vorzugsweise 90°. Es sind jedoch durchaus auch noch andere Polarisator-Anordnungen möglich, mit denen ebenfalls gute Ergebnisse erzielbar sind. Solche lassen sich dabei ohne weiteres durch einfaches Optimieren bestimmen.

Die für den erfindungsgemässen Zweck verwendbare und in der Zelle eine S_{c}*-Phase ausbildende Flüssigkristallmischung zeichnet sich insbesondere durch einen gesättigten Schaltwinkel α > 60° und eine Ganghöhe p > d aus.

Zwei Beispiele von erfindungsgemässen Flüssigkristallmischungen sind in den am Ende angefügten Tabellen 1 und 2 dargestellt und mit Testmischung A und B bezeichnet. Sie zeichnen sich zusätzlich noch dadurch aus, dass sie oberhalb der S_{C}*-Phase eine cholesterische Phase N* aufweisen, d.h. beim Abkühlen von etwa 100°C auf Zimmertemperatur von der isotropen Phase in eine cholesterische Phase N* und dann direkt in die gewünschte S_{C}*-Phase übergehen.

Zur Herstellung der erfindungsgemässen Flüssigkristallzelle wird die ferroelektrische Flüssigkristallmischung in eine vorbereitete Zelle mit einem Plattenabstand d von etwa 2,1 µm und parallel geriebenen Orientierungsschichten gefüllt. Dies kann in bekannter Art und Weise durch Kapillarwirkung erfolgen, und zwar bei einer Temperatur von etwa 90°C. Anschliessend wird die Zelle innerhalb von 20 sec auf 50°C abgekühlt, wobei sich die gewünschte ferroelektrische Flüssigkristallkonfiguration von selbst bildet. Beim Abkühlen der Flüssigkristallschicht von der N*-Phase in die S_{c}*-Phase bilden sich zudem, und zwar ebenfalls spontan, mikroskopisch sichtbare Domänen von einigen µm Breite und einigen hundert µm Länge.

In der Tafel 1 sind zwei Polarisationsmikroskopaufnahmen von zwei Zellen abgebildet, welche je eine Schichtdicke d von 2 µm und zwei gekreuzte Polarisatoren besitzen. Hierbei zeigt das Bild (a) eine für die erfindungsgemässe Anzeigezelle verwendbare Flüssigkristallmischung mit einem Phasenübergang N-S_{c}* und das Bild (b) eine herkömmliche ferroelektrische Flüssigkristallmischung mit einem Phasenübergang N-S_{A}-S_{C}* (A steht hierbei für eine Konfiguration, bei welcher alle Flüssigkristallmoleküle im wesentlichen senkrecht auf den smektischen Ebenen stehen). Aus diesen Aufnahmen ist gut ersichtlich, dass die erfindungsgemässe Flüssigkristallmischung im betriebsbereiten Zustand eine streifenförmige Domänen-Struktur besitzt, welche bei bekannten ferroelektrischen Anzeigezellen nicht gebildet wird.

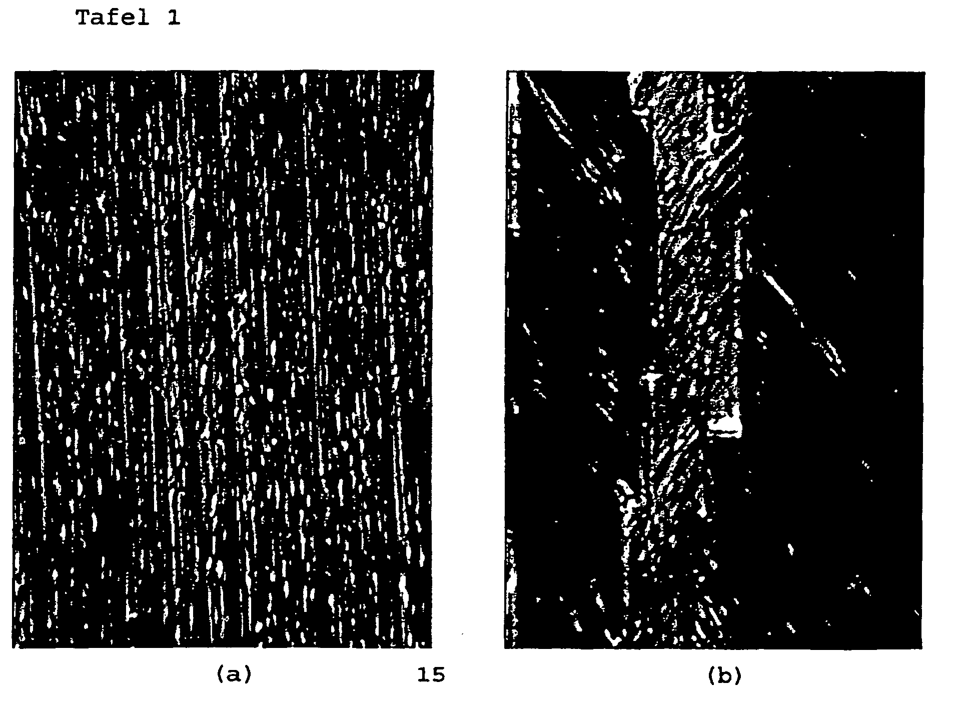

Die erfindungsgemässe Flüssigkristallzelle zeichnet sich durch eine Reihe von Vorteilen aus. So erleichtert die spontane Bildung der Flüssigkristallkonfiguration (spontane Orientierung ohne elektrische Formierung) die Produktion von ferroelektrischen Anzeigezellen beträchtlich. Ebenso kann die erfindungsgemässe Anzeigezelle gefahrlos über den Klärpunkt erwärmt werden, da sich beim Abkühlen die optimale Konfiguration wieder von selbst bildet. Schliesslich kommt die erfindungsgemässe Anzeigezelle selbst bei einer Aktiv-Matrix-Ansteuerung mit kleinen Ansteuerspannungen aus und besitzt einen hohen Kontrast sowie einen grossen Phasenbereich.

Zur Erklärung dieser Vorzüge muss man zwischen der mikroskopischen Struktur und dem darüber gemittelten makroskopischen Erscheinungsbild unterscheiden. Dies soll anschliessend noch näher erläutert werden.

Ausgang für die nachfolgenden Erläuterungen ist hierbei die anhand der Figuren 1 und 2 beschriebene Konfiguration einer Transmissionsanzeigezelle, bei der die Flüssigkristallschicht so zwischen den beiden gekreuzten Polarisatoren positioniert ist, dass einer der beiden Polarisatoren parallel zur Reibrichtung orientiert ist, und die Zelle in Bildpunkt-Segmente aufgeteilt ist, welche zum Beispiel durch eine Aktiv-Matrix elektrisch ansteuerbar sind.

Kommen wir zuerst zu den makroskopischen Beobachtungen:

Wie bereits erwähnt, zeichnet sich die erfindungsgemässe Anzeigezelle unter anderem dadurch aus, dass
- die Anzeige bei U = 0 dunkel und bei |U| > 0 hell ist,
- die Strom-Spannungs-Hysteresekennlinie je zwei gleich grosse Höchstwerte zeigt,
- die Doppelbrechung Δn im feldfreien Zustand grösser ist als im gesättigten Zustand, und
- die Sättigungsspannung auch bei sehr kleiner spontaner Polarisation P_{S} (P_{S}< 5 nC/cm²) verhältnismässig klein ist.

Bei U = 0 ist die optische Achse parallel zur Reibrichtung, die Anzeige also dunkel und die Rest-Transmission sehr klein. Legt man nun eine Spannung an, so wird die Anzeige hell. Hierbei ist die Wirkung einer positiven Spannung gleich, wie die der entgegengesetzten negativen Spannung. Dies erlaubt eine symmetrische Ansteuerung, bei der periodisch ein Bild mit positiver und eines mit negativer Spannung erzeugt wird. Diese Möglichkeit des Hin- und Herschaltens zwischen positiven und negativen Spannungen verhindert das Entstehen von Geisterbildern, so wie das zum Beispiel bei SSF(Surface Stabilized Ferroelectric Liquid Crystal)-Anzeigen der Fall ist.

Die Tafel 2 zeigt die mit der Testmischung A bei Zimmertemperatur gemessene Strom-Spannungs-Hysteresekennlinie für eine an die Zelle angelegte, symmetrische Dreiecksspannung mit ±5 V und 11,3 Hz. Diese Strom-Spannungs-Hysteresekennlinie weist die bereits vorstehend genannten Höchstwerte auf, und zwar einen für U > 0 und einen für U < 0. Das bedeutet, dass beim Übergang von der negativ gesättigten Spannung zu Null und von Null zur positiv gesättigten Spannung jeweils die Hälfte der spontanen Polarisationen umschaltet.

Demgegenüber zeigt die Tafel 3 die zum gleichen Spannungsverlauf gehörende Licht-Spannungsabhängigkeit. Die Licht-Spannungskennlinie ist - abgesehen von einer gleichmässigen Hysterese, was auf ein domänenweises Schalten hindeutet - im wesentlichen symmetrisch bezüglich der angelegten Spannung. Durch den periodischen Spannungswechsel pro Bild beeinträchtigt diese Hysterese die Bildqualität nicht, da die Spannung erfindungsgemäss immer von Null aus an den gewünschten Wert herangefahren wird. In bevorzugten Ausführungsformen der Erfindung unterscheiden sich die Transmissionswerte der beiden positiven und negativen gesättigten Zustände um nicht mehr als 10% voneinander (100% Transmission entspricht dem Lichtdurchlass bei parallelen Polarisatoren und U = 0.).

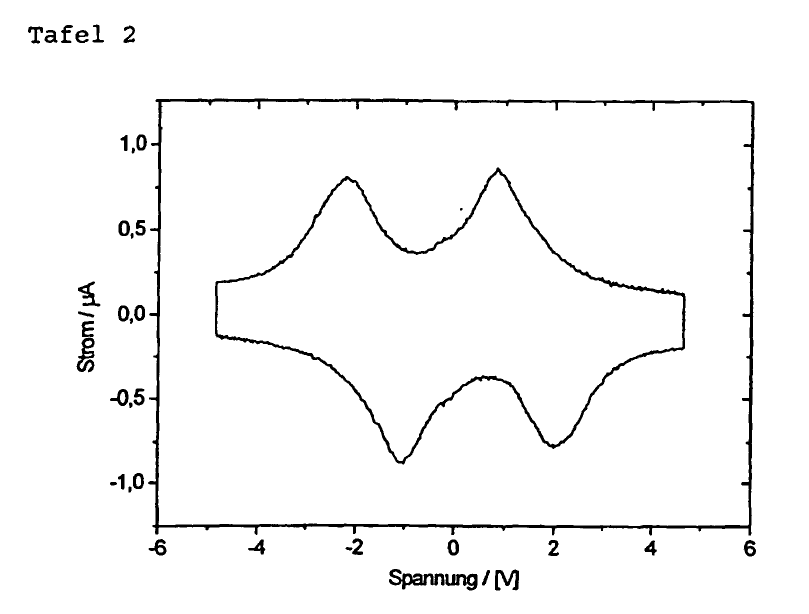

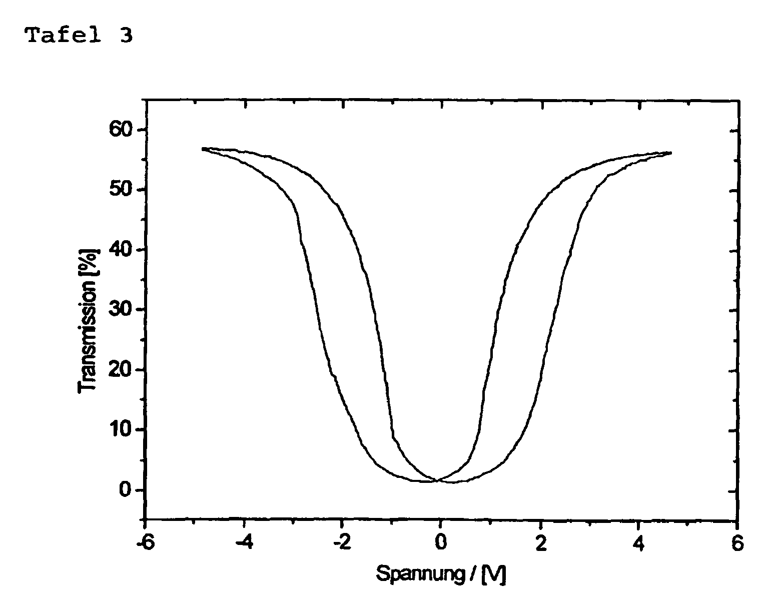

Überraschenderweise ist die Doppelbrechung Δn im feldfreien Zustand grösser als im gesättigten Zustand, bei welchem eine Ansteuerspannung anliegt, die so gross ist, dass eine weitere Spannungserhöhung keine wesentliche Transmissionsänderung mehr bewirkt. Dies ist vorteilhaft, weil die kleinere Doppelbrechung im Hellzustand die Verwendung eines grösseren Zellabstandes erlaubt, was für die Produktion von erfindungsgemässen Anzeigezellen sehr wichtig ist. Das Verhalten der Doppelbrechung Δn zeigt aber auch, dass hier keine antiferroelektrische Zelle vorliegt, da ebendort die Doppelbrechung im gesättigten Zustand grösser ist als im Nullfeld.

Die Tafel 4 zeigt schliesslich noch eine Messung mit der Testmischung B. Die bei dieser Messung an die entsprechende Anzeigezelle angelegte Ansteuerspannung setzt sich hierbei aus einer Folge von 16 linear ansteigenden Doppelpulsen zusammen, von denen jeder aus zwei entgegengesetzten, gleich grossen Pulsen von je 20 ms Dauer besteht.

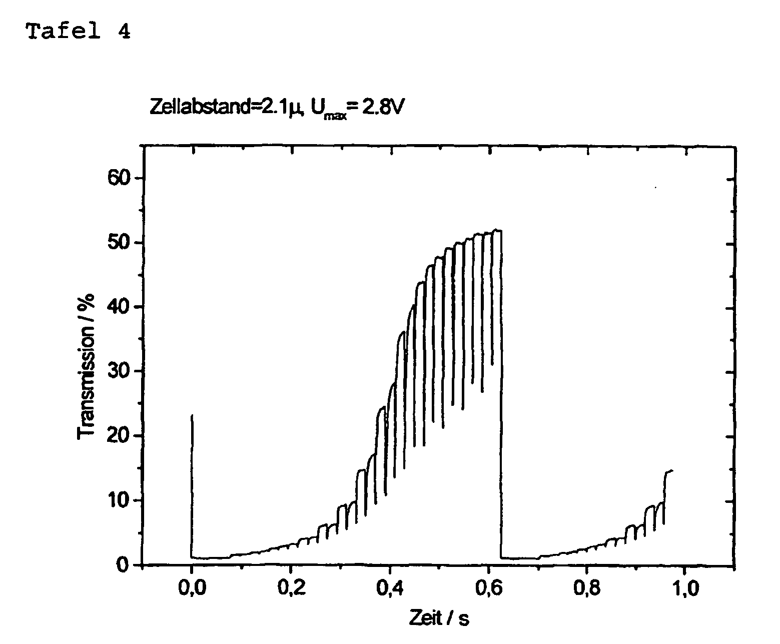

Aus dieser Messung geht klar hervor, dass die Zelle bereits bei einer sehr niedrigen Spannung von 2,8 V vollständig vom gesättigten Zustand auf Dunkel schaltet, und dies mit einer hohen Geschwindigkeit (Schaltzeit t < 500 µs). Ebenso zeigt die Tafel 4, dass die erfindungsgemässe Anzeigezelle feine Graustufen darstellen kann.

Kommen wir nun zum mikroskopischen Erscheinungsbild:

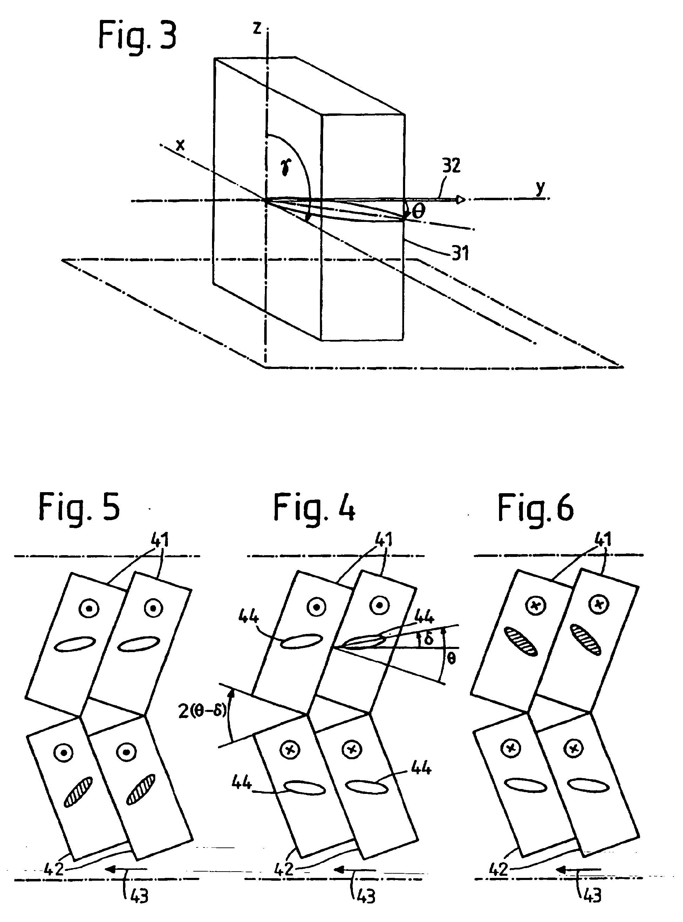

Eine stark vereinfachte mikroskopische Deutung der vorstehend zusammengefassten Befunde lässt sich anhand der Figuren 3 bis 6 darlegen. Von diesen zeigen die Figur 3 eine perspektivische Ansicht einer smektischen Schicht 31 und die Figuren 4 bis 6 je einen Schnitt durch mehrere, aneinander anliegende smektische Schichten 41 und 42.

Die smektischen Schichten der Flüssigkristallschicht stehen bei erfindungsgemässen Anzeigezellen im wesentlichen senkrecht zu den Platten der Zelle. Ferner sind die zueinander parallel angeordneten Moleküle jeder Schicht um den Kippwinkel θ gegen die in der Figur 3 gezeichneten Ebenen-Normale 32 geneigt. Zur vollständigen Charakterisierung der Konfiguration dient noch der in der X-Z Ebene liegende Winkel γ. Für chiral-smektische Phasen ohne Berandungseffekte ist dieser Winkel γ nicht konstant, sondern nimmt von Schicht zu Schicht zu. Wenn man daher in y-Richtung der Ebenen-Normalen folgt bewegen sich die Moleküle der einzelnen Schichten auf einem Kegel und bilden so die eingangs bereits genannte Helix mit der Helixganghöhe p. Im hier vorliegenden Fall ist aber die Helix durch Randkräfte aufgewunden, d.h. γ ist etwa 90°.

In den Figuren 4, 5 und 6 sind noch mit • und x die Richtungen der spontanen Polarisationen Pₛ (• = Pₛ nach vorne gerichtet; x = Pₛ nach hinten gerichtet) und die Projektionen des Brechungsindexellipsoides 44 der Moleküle auf die Anzeigeebene dargestellt, und zwar für ein verschwindendes (Figur 4, U = 0), positives (Figur 5, U > 0) und negatives (Figur 6, U < 0) elektrisches Feld.

Die Schichten 41 bzw. 42 der Figuren 4, 5 und 6 stellen nun zwei streifenartige Domänen der vorstehend beschriebenen Art dar. Diese verlaufen im wesentlichen parallel zur Reibrichtung 43.

Im in der Figur 4 gezeichneten feldfreien Zustand weisen benachbarte Domänen entgegengesetzt gerichtete spontane Polarisationen Pₛ auf. Die Projektionen der optischen Achsen auf die Anzeigeebene sind dabei in den beiden Domänen nahezu parallel, das heisst sie schliessen mit der Reibrichtung 43 nur einen kleinen Winkel δ ein. Die Flüssigkristallschicht hat daher in diesem Zustand ihre maximale Doppelbrechung. Mit der bevorzugten Polarisatororientierung ist die Anzeigezelle zudem dunkel für U = 0. Für eine genügend hohe Ansteuerspannung U schaltet - je nach Vorzeichen von U - die eine oder andere Domäne (schattiert gezeichnete Brechungsindexellipsoide in den Figuren 5 und 6). In den so entstandenen Konfigurationen sind die Moleküle der beiden Domänen dann nicht mehr parallel, sonder um den Winkel 2(θ-δ) gegeneinander verdreht, was die beobachtete kleinere Doppelbrechung im gesättigten Zustand erklärt.

Um von der Nullstellung zur positiv gesättigten Konfiguration zu schalten, muss Ladung auf die Elektroden fliessen. Dieselbe Ladung fliesst, wenn von der negativ gesättigten Zellkonfiguration auf Null geschaltet wird. Die Beobachtung, dass die Umladung vom negativ gesättigten zum positiv gesättigten Zustand in zwei Stromstössen erfolgt (Tafel 2), zeigt, dass der in der Figur 4 gezeichnete Zwischenzustand für U = 0 tatsächlich angenommen wird.

Dieses Modell ist sicherlich eine starke Vereinfachung des neuen elektrooptischen Effektes. So besteht ein nicht unerheblicher Bruchteil der Anzeige aus Versetzungslinien, ebenso ist in dieser Darstellung vernachlässigt, dass die Moleküle aus der Ebene gekippt sein können (γ ≠ 90°) und dass die smektischen Schichten nicht exakt senkrecht auf der Anzeigeebene stehen müssen. Das Modell erklärt aber die vorstehend beschriebenen Beobachtungen und zeigt auf, dass es sich bei der erfindungsgemässen Anzeigezelle um einen völlig neuen Anzeigen-Typ handelt.

Dass es sich hierbei auch um einen von der antiferroelektrischen Anzeigezelle verschiedenartigen Zellentyp handelt, zeigt der alternierende Richtungswechsel der spontanen Polarisationen. Diese wechseln ihre Richtung im hier vorliegenden Fall nämlich nicht von smektischer Schicht zu smektischer Schicht sondern von Domäne zu Domäne, welche ihrerseits jeweils hunderte von smektischen Ebenen umfassen.

Eine wichtige Eigenschaft einer mit abwechselnd positiver und negativer Spannung angesteuerten Anzeigezelle ist die Symmetrie der elektrooptischen Antwort bezüglich Vorzeichenwechsel. Wie man aus den Figuren 4, 5 und 6 leicht sehen kann, ist dieser nur dann gewährleistet, wenn die streifenförmigen Domänen möglichst fein verteilt und gleich gross sind. Bei den feinen Linien, die sich in der erfindungsgemässen Anzeigezelle spontan bilden, ist dies automatisch der Fall. Existiert allerdings oberhalb der S_{C}-Phase noch eine S_{A}-Phase und/oder ist der gesättigte Schaltwinkel α kleiner als 60°, dann sind die Domänen, wenn überhaupt vorhanden, so doch grossflächiger und nicht linienförmig. Die elektrooptische Antwort ist demzufolge entsprechend dem Zufall der Domänenbildung unsymmetrisch, was zu Flimmererscheinungen führt, weil die Anzeige von Bild zu Bild ihre Helligkeit ändert.

Aufgrund der sehr geringen Betriebsspannung, der analogen Reproduzierbarkeit von Graustufen, den hohen Kontrastwerten und der verhältnismässig einfächen Herstellung sowie aufgrund der von ferroelektrischen Anzeigezellen bereits bekannten Vorzügen, eignet sich die erfindungsgemässe Flüssigkristallzelle besonders gut für Anwendungen, welche rasche Bildabfolgen verarbeiten müssen. Dazu gehören beispielsweise Videoanzeigen für Fernsehgeräte, Videocameras, Head-Mounted-Displays, Videoprojektoren, Multimediageräte etc.

Es sei an dieser Stelle noch darauf hingewiesen, dass die vorstehend beschriebene Flüssigkristallzelle nur eine Auswahl von mehreren möglichen Ausführungsformen der Erfindung darstellt.

So kann die erfindungsgemässe Anzeigezelle nicht nur in Transmission, so wie das vorstehend beschrieben ist, sondern auch in Reflexion betrieben werden und dementsprechend ausgebildet sein. Der Reflektor kann dabei diffus sein und wird in diesem Fall mit einer transmittiven Anzeige gemäss Figur 1 kombiniert. Der Reflektor kann aber auch spekular spiegeln, was dann zu einer Zelle mit geringerer Schichtdicke d führt.

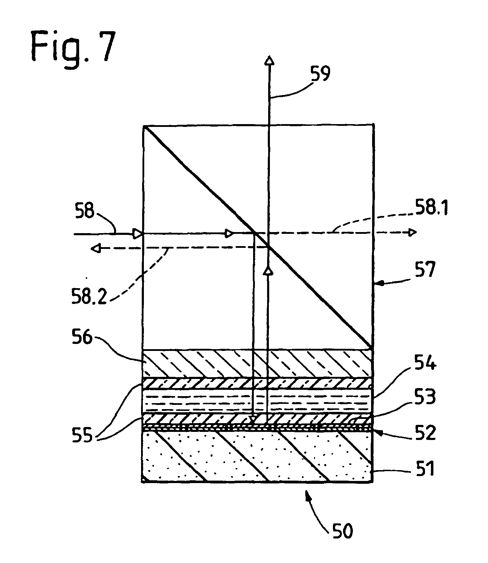

Die Figur 7 zeigt nun als Beispiel für eine spekular, reflektive Anwendung einen Teil 50 einer erfindungsgemässen, reflektiven Projektionsanzeige. Auf einer Siliziumplatte 51 ist hierbei eine geeignete Halbleiterstruktur 52 zur Erzeugung der notwendigen Treiberspannungen aufgebracht. Ferner sind die dazu gehörenden Elektroden mit je einer lichtreflektierenden Metallfläche 53 versehen und die Flüssigkristallschicht 54 von den zwei Orientierungsschichten 55 begrenzt. Die Anzeige besitzt zudem eine zweite Platte, nämlich eine lichtdurchlässige Gegenplatte 56 mit den nicht gezeichneten Gegenelektroden, sowie einen über der Platte 56 angeordneten, polarisierenden Strahlteiler 57.

Beim Betrieb dieser Anzeige wird das Licht der nicht gezeichneten Projektionslampe entweder in die drei Grundfarben aufgespalten und auf drei verschiedene Teile 50 gelenkt, oder es durchläuft einen Farbfilter, das während je eines Drittels der Einzelbildzeit rotes, grünes und blaues Licht durchlässt. In beiden Fällen trifft das Licht 58 auf den polarisierenden Strahlteiler 57, der die eine Polarisationskomponente reflektiert und die andere (58.1) durchlässt. Das reflektierte und auf den Flüssigkristall einfallende Licht ist also linear polarisiert. Es durchquert die Flüssigkristallschicht 54 und wird von den spiegelnden Elektroden 53 zurückreflektiert und durchquert auf dem Rückweg noch einmal den Flüssigkristall. Der polarisierende Strahlteiler 57 wirkt dann als Analysator, welcher nur die Komponente 59 durchlässt, nämlich diejenige, welche durch die elektrooptisch modulierte Doppelbrechung der Flüssigkristallschicht erzeugt wird. Die andere Komponente 58.2 wird zur Lampe zurückgespiegelt. Das modulierte Licht 59 wird anschliessend durch eine geeignete Optik auf den Projektionsschirm (Rück- oder Frontprojektion) projiziert, wobei im Falle der Strahlaufteilung die drei den Grundfarben zugeordneten Strahlen wieder rekombiniert werden.

Optisch entspricht diese Anordnung einer Anzeige mit doppelter Dicke zwischen zwei gekreuzten Polarisatoren. Aus dem vorstehend beschriebenen Funktionsablauf geht nämlich hervor, dass der von der Lichtquelle erzeugte und auf die Zelle auftreffende Lichtstrahl die doppelbrechende Flüssigkristallschicht 54 zweimal durchquert, bevor es auf den Analysator trifft. Demzufolge ist die vom Licht im Flüssigkristall zurückgelegte Strecke d_{eff} doppelt so gross wie die Dicke d der Flüssigkristallschicht, also 2d. Zur Realisierung einer erfindungsgemässen und für den reflektiven Betrieb vorgesehene Anzeigezelle kann daher die Zelldicke d im Vergleich zu einer gleichwertigen Transmissionsanzeigezelle halbiert werden, was ebenfalls zu einer Halbierung der notwendigen Betriebsspannungen führt.

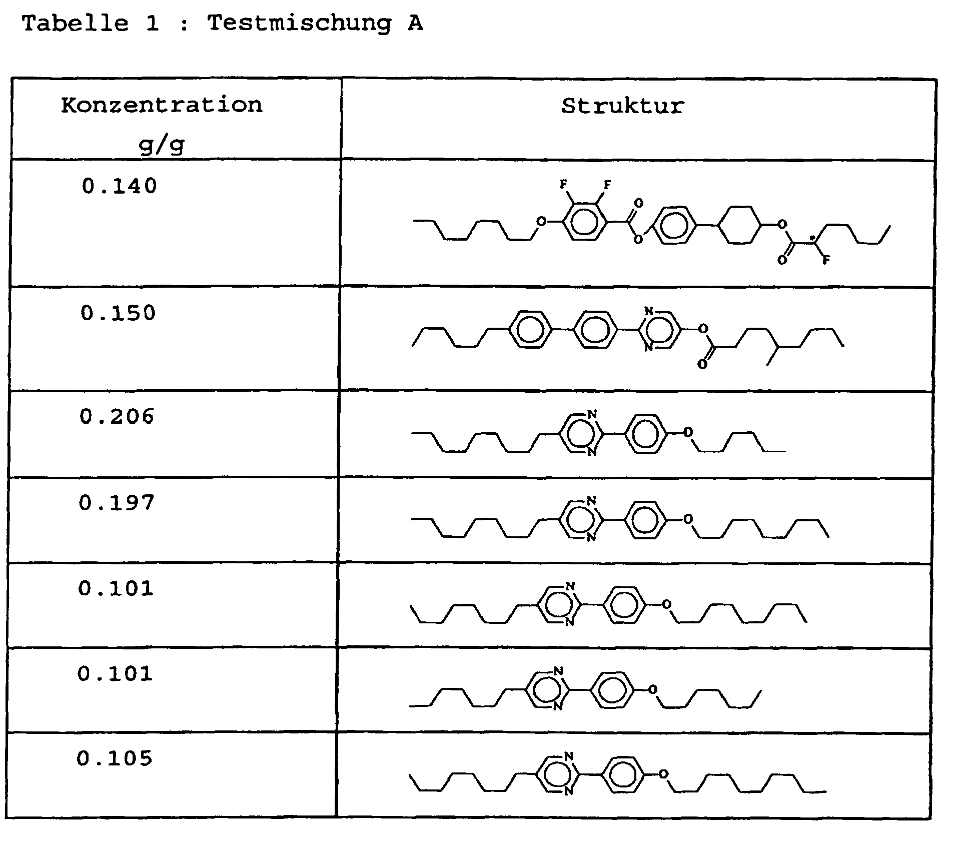

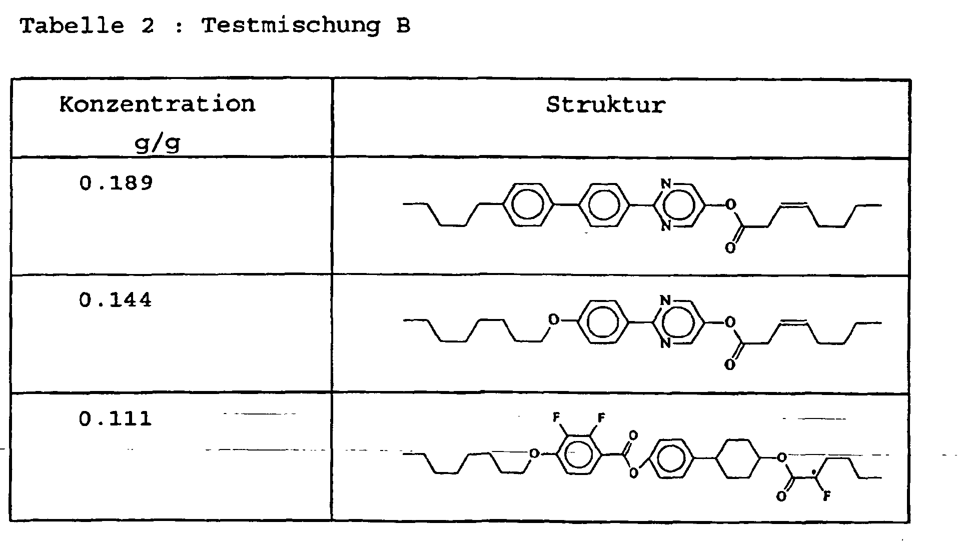

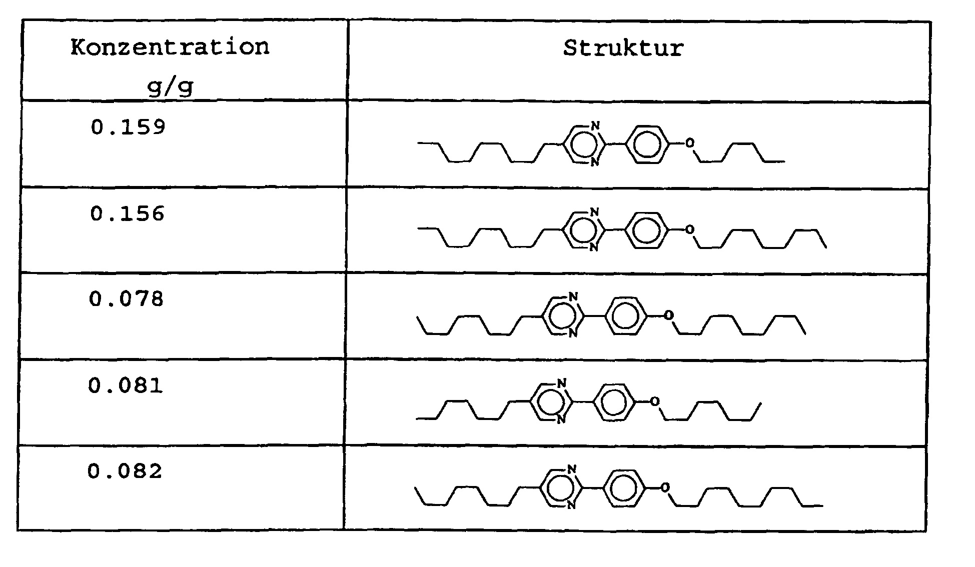

## Patentansprüche

1. Flüssigkristallzelle mit einer ferroelektrischen, chiral-smektischen, doppelbrechenden Flüssigkristallschicht (2) und mindestens einem Polarisator (5,6), wobei die Zelle (1) ein Paar die Flüssigkristallschicht (2) einschliessender paralleler Platten (3,4) besitzt, von denen jede mit einer die Moleküle der Flüssigkristallschicht (2) ausrichtenden Oberflächenstruktur und mindestens einer Elektrode (7,8) zur Erzeugung eines elektrischen Feldes mit einer Spannung U versehen ist, und wobei die Flüssigkristallschicht (21) eine Schichtdicke d und einen gesättigten Schaltwinkel α aufweist, **dadurch gekennzeichnet, dass** die Schichtdicke d kleiner ist als die Helixganghöhe p der Flüssigkristallschicht, dass der gesättigte Schaltwinkel α grösser ist als 60° und die Flüssigkristallschicht oberhalb der S_{c}*-Phase eine cholesterische N-Phase ausbildet, dass der optische Gangunterschied Δn·d_{eff} der Zelle bei U = 0 grösser ist als im gesättigten Zustand, wobei Δn die Doppelbrechung und d_{eff} die vom Licht zwischen einem Polarisator und einem Analysator im Flüssigkristall zurückgelegte Strecke ist, und dass die Strom-Spannungskennlinie der Zelle zwei Höchstwerte besitzt, und zwar einen für U > 0 und einen für U < 0.

2. Flüssigkristallzelle nach Anspruch 1, **dadurch gekennzeichnet, dass** sie für eine Transmissionsanzeige ausgebildet ist, und sich die Lichttransmissionswerte der positiv und negativ gesättigten Zustände um nicht mehr als 10% voneinander unterscheiden.

3. Flüssigkristallzelle nach Anspruch 1, **dadurch gekennzeichnet, dass** sie für den reflektiven Betrieb ausgebildet ist und einen spekularen oder einen diffusen Spiegel besitzt.

4. Flüssigkristallzelle nach einem der Ansprüche 1 bis 3, **dadurch gekennzeichnet, dass** die Oberflächenstruktur durch parallel geriebene Orientierungsschichten gebildet wird und dass mindestens ein Polarisator (5,6) parallel zur Reibrichtung ist.

5. Flüssigkristallzelle nach einem der Ansprüche 1 bis 3, **dadurch gekennzeichnet, dass** die Oberflächenstruktur durch zwei photoorientierte Orientierungsschichten (16, 17) mit parallelen Direktoren gebildet wird und dass mindestens ein Polarisator (5, 6) parallel zum Direktor ist.

6. Flüssigkristallzelle nach einem der Ansprüche 1 bis 5, **gekennzeichnet durch** zwei zueinander senkrecht angeordnete Polarisatoren (5, 6).

7. Anzeigemittel enthaltend eine Flüssigkristallzelle nach einem der Ansprüche 1 bis 6.

8. Anzeigemittel nach Anspruch 7, wobei dieses eine Videocamera, eine Anzeige für ein Fernsehgerät, ein Headmounted-Display, ein Videoprojektor oder ein Multimediagerät ist.

## Claims

1. A liquid crystal cell with a ferroelectric, chiral smectic, birefringent liquid crystal layer (2) and at least one polarizer (5, 6), the cell (1) having a pair of parallel plates (3, 4) which enclose the liquid crystal layer (2) and each of which is provided with a surface structure orienting the molecules of the liquid crystal layer (2) and at least one electrode (7, 8) for generating an electric field with a voltage U, and the liquid crystal layer (21) having a layer thickness d and a saturated switching angle α, **characterized in that** the layer thickness d is smaller than the helix pitch p of the liquid crystal layer, that the saturated switching angle α is greater than 60° and the liquid crystal layer forms a cholesteric N phase above the S_{c}* phase, that the optical path difference Δn · d_{eff} of the cell at U = 0 is greater than that in the saturated state, Δn being the birefringence and d_{eff} the distance covered by the light in the liquid crystal between a polarizer and an analyzer, and that the current-voltage characteristic of the cell has two maxima, one for U > 0 and one for U < 0.

2. A liquid crystal cell according to claim 1, **characterized in that** it is a transmission display, and that the light transmittance values of the positively and negatively saturated states differ from one another by not more than 10%.

3. A liquid crystal cell according to claim 1, **characterized in that** it is designed for reflecting operation, and **in that** said cell has a specular or a diffuse mirror.

4. A liquid crystal cell as claimed in any of claims 1 to 3, **characterized in that** the surface structure is formed by orientation layers rubbed parallel and wherein at least one polarizer (5,6) is parallel to the rubbing direction.

5. A liquid crystal cell as claimed in any of claims 1 to 3, **characterized in that** the surface structure is formed by two photo-oriented orientation layers (16, 17) with parallel directors and **in that** at least one polarizer (5, 6) is parallel to the director.

6. A liquid crystal cell as claimed in any of claims 1 to 5, **characterized in that** it comprises two polarizers (5, 6) arranged perpendicular to one another.

7. A display means containing a liquid crystal cell as claimed in any claims 1 to 6.

8. A display means as claimed in claim 7, which is a video camera, a display for a television set, a head-mounted display, a video projector or a multimedia device.

## Revendications

1. Cellule à cristaux liquides, avec une couche ferroélectrique, smectique chirale, biréfringente de cristaux liquides (2) et au moins un polarisateur (5, 6), la cellule (1) comportant une paire de plaques parallèles (3,4) entourant la couche de cristaux liquides (2), dont chacune est munie d'une structure superficielle alignant les molécules de la couche de cristaux liquides (2) et d'au moins une électrode (7, 8) pour créer un champ électrique avec une tension U, et la couche de cristaux liquides (21) présentant une épaisseur de couche d et un angle d'indexation saturé α, **caractérisée en ce que** l'épaisseur de couche d est inférieure au pas de la structure hélicoïdale p de la couche de cristaux liquides, **en ce que** l'angle d'indexation saturé α est supérieur à 60° et **en ce qu'**au dessus de la phase S_{c}*, la couche de cristaux liquides forme une phase N cholestérique, **en ce que** la différence de pas optique Δn*d_{eff} de la cellule à U = 0 est supérieure à celle dans l'état saturé, Δn étant la biréfringence et d_{eff} étant le trajet parcouru par la lumière entre un polarisateur et un analyseur dans le cristal liquide, et **en ce que** la courbe caractéristique courant/tension de la cellule comporte deux valeurs maximales, à savoir l'une pour U > 0 et l'une pour U < O.

2. Cellule à cristaux liquides selon la revendication 1, **caractérisée en ce qu'**elle est conçue pour un affichage de transmission et **en ce que** les valeurs de transmission lumineuse des états saturés de façon positive et négative ne se différencient pas de plus de 10 %.

3. Cellule à cristaux liquides selon la revendication 1, **caractérisée en ce qu'**elle est conçue pour le fonctionnement réfléchissant et **en ce qu'**elle comporte un miroir spéculaire ou un miroir diffus.

4. Cellule à cristaux liquides selon l'une quelconque des revendications 1 à 3, **caractérisée en ce que** la structure superficielle est formée de couches d'orientation abrasées en parallèle et **en ce qu'**au moins un polarisateur (5, 6) est parallèle au sens d'abrasion.

5. Cellule à cristaux liquides selon l'une quelconque des revendications 1 à 3, **caractérisée en ce que** la structure superficielle est formée de deux couches d'orientation (16, 17) photo-orientées avec des directeurs parallèles et **en ce qu'**au moins un polarisateur (5, 6) est parallèle au directeur.

6. Cellule à cristaux liquides selon l'une quelconque des revendications 1 à 5, **caractérisée par** deux polarisateurs (5, 6) disposés de façon mutuellement perpendiculaire.

7. Moyen d'affichage contenant une cellule à cristaux liquides selon l'une quelconque des revendications 1 à 6.

8. Moyen d'affichage selon la revendication 7, ce dernier étant une caméra vidéo, un affichage pour un téléviseur, un afficheur facial, un vidéoprojecteur ou un appareil multimédia.
